# EUROPÄISCHE PATENTANMELDUNG

(11) **EP 2 562 381 A1**
(43) Veröffentlichungstag der Anmeldung: **27.02.2013**
(21) Anmeldenummer: 12184690.1
(22) Anmeldetag: 17.02.2011
(51) Int. Cl.: F02B 33/42, F02D 41/00, F02B 39/16

(54) **Verfahren zur Einstellung eines Ladedruckes in einer Brennkraftmachine mit einem Druckwellenlader**

(30) Priorität: 17.02.2010 DE 102010008385
(62) Teilanmeldung aus: 11714680.3
(71) Anmelder: Benteler Automobiltechnik GmbH, 33102 Paderborn (DE)
(72) Erfinder: Legrom, Jillis, 5622 Eindhoven (NL); van den Munckhof, Theo, 5753 Deurne (NL); Fricke, Fabian, 33102 Paderborn (DE)
(74) Vertreter: Griepenstroh, Jörg

(57) **Zusammenfassung**

Die vorliegende Erfindung betrifft ein Verfahren zur Einstellung eines Ladedruckes einer Verbrennungskraftmaschine (A), wobei der Ladedruck durch einen Druckwellenlader (B) aufgebaut wird und an den Druckwellenlader (B) ein Kanal 1 (O) zum Ansaugen von Frischluft, ein Kanal 2 (P) zum Abführen der komprimierten Frischluft, ein Kanal 3 (Q) zum Zuführen von Abgas und ein Kanal 4 (R) zum Abführen von Abgas angeschlossen sind und der Druckwellenlader (B) ein Kaltgasgehäuse, an dem Kanal 1 (O) und Kanal 2 (P) angeschlossen sind, ein Gastaschenventil (F), das im Bereich des Kanal 3 (Q) angeordnet ist und ein Umluftventil (H), das den Kanal 2 (P) mit dem Kanal 3 (Q) verbindet, angeschlossen sind, **dadurch gekennzeichnet,** dass im Kaltgasgehäuse eine Steuerscheibe (D) zur Einstellung des Druckwellenprozesses über einen geometrischen Versatz von Kanal 3 - 4 zu Kanal 1 - 2 angeordnet ist und der Ladedruck in Abhängigkeit einer Steuerscheibenstellung (a) und/oder einer Gastaschenventilstellung (b) und/oder einer Rotordrehzahl (c) des Druckwellenladers (B) und/oder einer Umluftventilstellung (d) eingestellt oder geregelt wird.

## Beschreibung

Die vorliegende Erfindung betrifft ein Verfahren zur Einstellung eines Ladedruckes einer Verbrennungskraftmaschine, wobei der Ladedruck durch einen Druckwellenlader aufgebaut wird, gemäß Patentanspruch 1.

Verbrennungskraftmaschinen nutzen zur Erhöhung ihrer Leistungsausbeute Bauteile, die geeignet sind, angesaugte Frischluft zu verdichten und anschließend dem Verbrennungsvorgang zuzuführen. Diese als Aufladesystem bezeichneten Maschinen nutzen verschiedene Verdichtertypen um den zuvor genannten Vorgang durchzuführen.

Eine Möglichkeit die Verbrennungskraftmaschine durch Verdichten der angesaugten Frischluft aufzuladen, besteht in der Nutzung eines Druckwellenladers. Der Wirkungsgrad dieser Druckwellenlader wird durch die mechanischen Bauteile und durch die Möglichkeit der adaptiven Anpassung auf den jeweiligen Betriebszustand des Motors in Form einer Regelung und Steuerung bestimmt.

Der Druckwellenlader ist aus feststehenden und rotierenden Bauteilen aufgebaut. Die feststehenden Bauteile sind: der Gehäusemantel, das Rotorgehäuse, das in Heißgas- und Kaltgasgehäuse aufgeteilt ist sowie die Zu- und Ableitungen zur Führung der gasförmigen Fluide. Die rotierenden Bauteile werden durch den Rotor selbst und gegebenenfalls durch einen Elektromotor zum Antrieb des Rotors gebildet.

Aus der DE 10 2006 020 522 A1 ist eine Verfahren zum Betreiben einer Brennkraftmaschine bekannt, bei dem Frischluft durch ein Druckwellenlader komprimiert wird, wobei mindestens ein Betriebsparameter des Druckwellenladers abhängig von mindestens einer Ist-Betriebsgröße der Brennkraftmaschine gesteuert oder geregelt wird. Das hier offenbarte Verfahren bedeutet insoweit eine Abkehr von dem bisherigen starren und im Wesentlichen ungesteuerten bzw. ungeregelten Betriebskonzepten von Druckwellenladern.

Durch die Anpassung des Betriebes des Druckwellenladers an den Ist-Betriebszustand der Brennkraftmaschine werden Pumpverluste der Brennkraftmaschine minimiert. Auch kann auf diese Weise das Ansprechverhalten des Druckwellenladers verbessert werden und es können die Bedingungen für eine Abgasnachbehandlung optimiert werden. Ein zu steuernder oder zu regelnder Betriebparameter des Druckwellenladers ist der Gehäuseversatz.

Für den Serieneinsatz eines Druckwellenladers, beispielsweise an einer Verbrennungskraftmaschine im Kraftfahrzeugbereich, gelten jedoch hohe Anforderungen an die Einsatzbedingungen sowie die Lebensdauererwartung. Hier ist es beispielsweise vorstellbar, dass der Druckwellenlader bei - 20 °C und bei + 50 °C Außentemperatur und über einen Lebenszyklus von mehreren Jahren hinweg einwandfrei funktionieren muss. Auch die Abgastemperaturen von 900 °C und höher wirken sich negativ auf die Langlebigkeit und die einwandfreie Funktion des Druckwellenladers aus.

Nachteilig bei den aus dem Stand der Technik bekannten Druckwellenladern ist die Steuerung des Druckwellenladers über einen Gehäuseversatz. Einen robusten Gehäuseversatz bereitzustellen, der ebenfall serientauglich ist, ist in einem wirtschaftlichen Ausmaß mit den bisher bekannten Herstellungsverfahren, insbesondere vor dem Hintergrund, dass geringe Spaltmaße zwischen den rotierenden und feststehenden Bauteilen des Druckwellenladers eingehalten werden müssen, um einen hohen Wirkungsgrad des Druckwellenladers zu garantieren, nicht möglich.

Weiterhin offenbaren die aus dem Stand der Technik bekannten Regelungs- und Steuerungsverfahren für Druckwellenlader den Einsatz einer Vielzahl von Sensoren, die für einen Serieneinsatz wiederum einen hohen Kostenaufwand verursachen und auch eine hohe Störanfälligkeit bedingen. Der Einsatz von redundanten Sensorsystemen würde zu noch höheren Kosten führen

Aufgrund der Druckunterschiede zwischen Ansaugtrakt und Abgastrakt bildet sich ein gasdynamischer Vorgang in den Rotorzellen des Druckwellenladers aus. Hier ist eine detaillierte Modellierung eines Druckwellenladers, die auf einem Steuergerät implementiert werden könnte, mit den heutigen CAx-Methoden (zum Beispiel CAE, CFD, BEM) nicht möglich.

Aufgabe der vorliegenden Erfindung ist es daher, ein Verfahren zur Steuerung und Regelung eines Druckwellenladers bereit zu stellen, welches das Emissionsverhalten, das Ansprechverhalten, die Dauerhaltbarkeit und den Wirkungsgrad des Druckwellenladers optimiert und gleichzeitig einen von äußeren Einflüssen weitestgehend unabhängigen Serieneinsatz ermöglicht.

Die zuvor genannte Aufgabe wird mit einem Verfahren mit den Merkmalen des Patentanspruches 1 gelöst.

Vorteilhafte Weiterbildungen sind Bestandteil der abhängigen Patentansprüche.

Das erfindungsgemäße Verfahren zur Einstellung eines Ladedruckes einer Verbrennungskraftmaschine, wobei der Ladedruck durch einen Druckwellenlader aufgebaut wird und wobei an den Druckwellenlader ein Kanal 1 zum Ansaugen von Frischluft, eine Kanal 2 zum Abführen der komprimierten Frischluft, ein Kanal 3 zum Zuführen von Abgas und ein Kanal 4 zum Abführen von Abgas angeschlossen sind und der Druckwellenlader ein Kaltgasgehäuse, an dem Kanal 1 und Kanal 2 angeschlossen sind, ein Gastaschenventil, das im Bereich des Kanals 3 angeordnet ist, ist dadurch gekennzeichnet, dass im Kaltgasgehäuse eine Steuerscheibe zur Einstellung des Druckwellenprozesses über einen geometrischen Versatz von Kanal 3 - 4 zu Kanal 1 - 2 angeordnet ist und der Ladedruck in Abhängigkeit von einer Steuerscheibenstellung und/oder einer Gastaschenventilstellung und/oder einer Rotordrehzahl des Druckwellenladers eingestellt und/oder geregelt wird. Im Rahmen der Erfindung können einzelne Betriebsparameter geregelt werden und gleichzeitig andere, eingestellt werden.

Als Alternative zu der Regelung durch die Umluftventilstellung kann eine variable Ventilsteuerzeit der Einlassventile und/oder Auslassventile dazu genutzt werden, Luft ins Abgassystem vor den Druckwellenlader zu spülen, um damit eine Nachreaktion mit gleichzeitigem Temperaturanstieg zu bewirken.

Vorteilig bei dem erfindungsgemäßen Verfahren ist eine Steuerung, die kostengünstig in dem Serieneinsatz zur Steuerung und Regelung von Druckwellenladern an Verbrennungskraftmaschinen realisiert werden kann. Durch das erfindungsgemäße Verfahren wird bei dem Druckwellenlader ein gegenüber dem Stand der Technik geringerer Energieverbrauch ermöglicht. Durch die quasi Echtzeitanpassung der Betriebsgrößen des Druckwellenladers an den jeweiligen Betriebszustand der Verbrennungskraftmaschine, ergeben sich somit geringe Verlustleistungen durch Druckwellenlader selber. Einer Steigerung des Wirkungsgrades des Druckwellenladers folgt eine Steigerung des Wirkungsgrades der Verbrennungskraftmaschine.

Unter eine Steuerscheibenstellung ist die Einstellung der im Kaltgasgehäuse angeordneten Steuerscheibe gemeint, die über ihre Fläche verteilt Öffnungen aufweist, die auf der einen Seite die Zuführungsöffnung der angesaugten Frischluft bzw. die Abführungsleitung der komprimierten Frischluft bzw. auf der anderen Seite die Rotorzelleneintrittsbereiche miteinander verbindet. Je nach Stellung der Steuerscheibe wird die Dauer der auf das zu verdichtende gasförmige Fluid wirkenden Druckwelle bestimmt. Es ergibt sich folglich ein Versatz zwischen Kanal 1 - 2 und Kanal 3 - 4.

Dies wirkt sich vorteilig auf den sich einstellenden gasdynamischen Effekt des Druckwellenladers direkt aus. Die Steuerscheibe selber wird dabei wiederum über einen Steuerscheibenschiebermotor angesteuert. Hierbei handelt es sich um einen Elektroaktuator, der die Steuerscheibe schnell und effizient in ihrer Einstellung verdrehen kann. In einer bevorzugten Ausführungsform wird die Steuerscheibenstellung in Abhängigkeit von mindestens einem der folgenden Betriebsparameter eingestellt: der Motordrehzahl, der Motortemperatur, der Ladelufttemperatur, der Ansauglufttemperatur-Istwert, dem Umgebungsluftdruck, der Abgastemperatur, des Ladedruck-Sollwertes, des Laderdruck-Istwertes, dem Betriebs-Sollpunkt.

Im Rahmen der Erfindung kann weiterhin der Umgebungsluftdruck oder aber auch die Umgebungstemperatur mit zur Steuerung der Steuerscheibenstellung genutzt werden. Bei der Motortemperatur kann es sich dabei um einen Temperaturabgriff, beispielsweise im Motorblockgehäuse, am Motoröl oder am Kühlwasser, oder Ähnlichem handeln, so dass auf vorhandene Sensoren zurückgegriffen werden kann. Eine Umrechnung der sensortechnisch abgegriffenen Motortemperatur auf die benötigte Betriebsgröße der Motortemperatur zur Steuerscheibenstellung kann wiederum über ein Rechenmodell innerhalb eines Steuergerätes erfolgen. Daraus ergibt sich der Vorteil, dass auf bereits vorhandene Sensoren zurückgegriffen werden kann, was sich kostengünstig auf einen seriennahen Einsatz, insbesondere in einem Kraftfahrzeug, auswirkt.

Weiterhin kann die Abgastemperatur im Rahmen der Erfindung, beispielsweise durch eine kombinierte Lambdasonden Temperaturabgasmessung durchgeführt werden. Hierdurch kann wiederum auf zusätzliche Sensorik im Abgasbereich verzichtet werden. Es ist jedoch auch vorstellbar im Abgasaustritt zwischen Auslassventil und Eintritt über den Kanal 3 in den Druckwellenlader bzw. nach Austritt aus dem Druckwellenlader in Kanal 4 bzw. einem sich daran anschließenden Abgastrakt bzw. Krümmer die Abgastemperatur zu messen. Es ist jedoch auch im Rahmen der Erfindung vorstellbar, dass die Abgastemperatur aufgrund eines Abgastemperaturmodels ermittelt wird. Hierbei erfolgt keine sensortechnische Erfassung.

Der Ladedruck-Sollwert kann dabei im Rahmen der Erfindung über ein Rechenmodell in Abhängigkeit des Betriebspunktes in einem jeweiligen Kennfeld der Verbrennungskraftmaschine bestimmt und somit vorgegeben werden. Der Ladedruck-Sollwert kann dabei auch direkt aus dem Motorsteuergerät ausgelesen werden bzw. durch das Motorsteuergerät zur Verfügung gestellt werden. Der Ladedruck-Istwert ist dabei ein Wert der sensortechnisch im Kanal 2 vor der Drosselklappe bzw. vor Eintritt in den Brennraum gemessen werden kann. Im Rahmen der Erfindung ist es auch vorstellbar, dass die Verbrennungskraftmaschine zwischen verdichteter Luft und Einlass in den Zylinder einen Ladeluftkühler aufweist. Hierdurch ändert sich nochmals der Druckzustand des Ladedruckes, so dass der Ladedruck über ein Computermodell in die gewünschte Betriebsgröße umgerechnet werden kann. Auch ist im Rahmen der Erfindung vorstellbar, den Ladedruck-Istwert über ein Rechenmodell zu bestimmen. Beispielsweise kann über das ideale Gasgesetz in Form einer Temperaturmessung und/oder weitere Größen, beispielweise Luftmassenmesser oder Drucksensor, der jeweilige benötigte Ladedruck bestimmt werden.

Der Betriebs-Sollpunkt ist der gewünschte Betriebspunkt in einem Kennfeld der Verbrennungskraftmaschine. Dieser kann wiederum beispielsweise durch die Motordrehzahl und die Fahrpedalstellung eines Kraftfahrzeuges ermittelt werden. Auch ist es im Rahmen der Erfindung vorstellbar, dass der Betriebssollpunkt aus dem Motorsteuergerät direkt ermittelt wird. Vorzugsweise handelt es sich dabei um einen Wert, der über die Fahrpedalstellung ermittelt wird. Im Rahmen der Erfindung ist es aber auch vorstellbar, dass der Betriebssollpunkt über die drehmomentbasierte Lasterkennung direkt aus einem Steuergerät abgeleitet oder ausgelesen wird.

In einer weiteren bevorzugten Ausführungsvariante wird die Steuerscheibenstellung in Abhängigkeit von der Differenz von Ladedruck-Sollwert und Ladedruck-Istwert eingestellt.

Durch eine Regelung und Steuerung der Steuerscheibenstellung in Abhängigkeit von der Differenz der beiden Ladedruckwerte ergibt sich die Möglichkeit den Ladedruck-Istwert besonders schnell ab- oder aufzubauen. Der Ladedruck-Sollwert kann im Rahmen der Erfindung beispielsweise über ein Rechenmodell bestimmt werden.

In einer weiteren bevorzugten Ausführungsform wird die Steuerscheibenstellung in Abhängigkeit von der Temperatur und/oder dem thermodynamischen Zustand der Frischluft im Kanal 1, der Rotordrehzahl und/oder der Druckwellenladergeometrie eingestellt. Im Rahmen der Erfindung wird abhängig von der Temperatur und dem thermodynamischen Zustand der Frischluft maßgeblich eine Bestimmung der jeweils sich einstellenden und zu erwartenden lokalen Schallgeschwindigkeit durchgeführt. Diese kann jedoch messtechnisch nicht erfasst werden und wird somit über Rechenmodelle bestimmt, die sich aus dem idealen Gasgesetz sowie strömungsmechanischen Formeln zur Bestimmung von Geschwindigkeiten herleiten.

Beispielsweise ist es möglich, über den Zustand im Kanal 1 vor Eintritt in die Rotorzelle über die thermodynamische Zustandsgleichung, die Geschwindigkeit als Funktion von der Gaskonstante, der Temperatur- und des Isentropenexponenten die lokale Schallgeschwindigkeit in den Zellen zu berechnen. Weitere Einflüsse, die zum Beispiel durch die Erwärmung der Zelle dargestellt sind, erfordern eine Korrektur des berechneten Wertes der lokalen Schallgeschwindigkeit in der Rotorzelle, da in der Rotorzelle selbst keine Messung der Temperatur und/oder der Gaszusammensetzung möglich ist. Die Rotordrehzahl kann dabei in einfachster Ausführungsform direkt von dem Rotormotor, bei dem es sich maßgeblich um einen Elektromotor handelt, abgegriffen werden.

Unter der Druckwellenladergeometrie werden, im Rahmen der Erfindung Bauraumzustandsgrößen verstanden, die sich aus den mechanischen Komponenten ergeben. Diese sind beispielsweise durch Länge, Breite, Höhe des Druckwellenladergehäuses definiert, durch Volumina der Rotorzellen oder aber auch durch die jeweiligen Ein- und Auslassöffnungen der Kanäle 1 bis 4. Weiterhin werden unter der Druckwellenladergeometrie auch dynamische Zustandsgrößen verstanden. Es kann sich hierbei beispielsweise um Anströmwinkel oder Einströmwinkel handeln. Die Einströmwinkel ergeben sich aufgrund der Einstellung der Steuerscheibenstellung oder durch verschiedene Ventile, wie beispielsweise der Drosselklappe. Es kann sich aber auch um eine Bypassöffnung in Form des Umluftventlis oder aber durch Umströmungen beispielsweise eines Ladeluftkühlers handeln. Hierbei ist je nach zu erreichender Genauigkeit des einzustellenden Betriebszustandes des Druckwellenladers die Komplexität des Rechenmodells der geometrischen Druckwellenladerabmaße zu wählen. Die Anströmung in die Rotorzellen selber ist je nach Druckwellenladergeometrie aber auch von der fixen Geometrie der Kanäle in das Gehäuse selber abhängig.

In einer weiteren bevorzugten Ausführungsvariante wird die Spülluftmenge von Kanal 1 zu Kanal 4 durch die Einstellung der Steuerscheibenstellung geregelt. Hierbei ist je nach gewünschtem Betriebszustand möglich, eine große Menge Frischluft von dem Einlass von Kanal 1 direkt in Kanal 4 zu überspülen, so dass wenig Restgasgemisch in der Rotorzelle verbleibt. In Teillastbetriebszuständen ist es unter Umständen vorteilig, einen gewissen Anteil von Restgas der Verbrennung erneut zuzuführen. Zur Reduzierung von Abgasemissionen ist es hier jedoch vorteilig, einen gewissen Anteil von Restgas der Verbrennung erneut zuzuführen, um weiterhin den Abbau von Stickoxiden zu fördern.

In einer weiteren besonders bevorzugten Ausführungsvariante wird die Spülluftmenge von Kanal 1 zu Kanal 4 während eines Kaltstarts durch die Steuerscheibenstellung eingestellt. Hierbei kann es je nach gewünschtem Betriebszustand im Kaltstartverhalten der Verbrennungskraftmaschine zu einer hohen Abgasrückführung oder aber einer hohen Durchspülungsrate kommen. Maßgeblich wird diese Einstellung mit von der Außentemperatur beeinflusst. Im Kaltstartverhalten ist jedoch die Abgastemperatur im Kanal 3 die kritische Größe, die beispielsweise durch die Steuerscheibenstellung und/oder Gastaschenventilstellung und/oder Rotordrehzahl und/oder Umluftventilstellung beeinflussbar ist und sich somit wiederum auf den Ladedruck auswirkt.

In einer weiteren bevorzugten Ausführungsvariante wird ein Überströmen von Abgas von Kanal 3 zu Kanal 2 in den Frischgasbereich durch die Steuerscheibestellung in Abhängigkeit von mindestens einem der nachfolgenden Betriebsparameter vermieden: dem Ladelufttemperatur-Istwert, dem Betriebs-Sollpunkt, der Motordrehzahl, der Ansauglufttemperatur, der Abgastemperatur.

Im Betrieb der Verbrennungskraftmaschine ist es hierbei das Ziel, den Durchbruch von Abgas von Kanal 3 zu Kanal 2 weitestgehend zu vermeiden. Durch ein Überströmen des Abgases in den Kanal 2 steigt die Ladelufttemperatur, wodurch sich das Volumen der Ladeluft erhöht, was im Teillastbetrieb zur Verbesserung des Wirkungsgrades durch entdrosseln genutzt wird. Hierbei ist jedoch zu beachten, dass eine zu hohe rückgeführte Abgasmenge zu Verbrennungsaussetzern führen kann.

In einer weiteren bevorzugten Ausführungsform wird die Gastaschenventilstellung in Abhängigkeit von mindestens einem der nachfolgenden Betriebsparameter eingestellt: der Motordrehzahl, der Motortemperatur, der Abgastemperatur, dem Ladedruck-Istwert, dem Ladedruck-Sollwert, dem Umgebungsluftdruck.

Das Gastaschenventil sitzt dabei im Kanal 3 kurz vor dem Einlass des vom Verbrennungstrakt abgeführten Abgases in den Druckwellenlader. Mit Hilfe des Gastaschenventils ist es auf der Heißgasgehäuseseite möglich die Einlassöffnungen für das Abgas zu vergrößern. Das Gastaschenventil selber wird dabei über einen Gastaschenventilstellmotor gesteuert. Über das Gastaschenventil kann ein Teil des Abgasmassenstroms gesteuert werden, so dass dieser nicht an der Verdichtung teilnimmt. Bei diesem Stellmotor kann es sich wiederum um einen Elektroaktuator handeln, der besonders reaktionsschnell die gewünschte Einstellung des Gastaschenventils ermöglicht. Durch die Steuerung oder Regelung der Stellung des Gastaschenventils wird die Verdichtungsleistung bestimmt und insbesondere das Ansprechverhalten der Brennkraftmaschine verbessert. Ein unerwünschtes Durchbrechen von Abgas von Kanal 3 zu Kanal 2 und die damit verbundene Wiederzuführung des Abgases zu dem Verbrennungsvorgang kann durch die Steuerung und Regelung des Gastaschenventils in Kombination mit der Steuerscheibenstellung vermieden werden.

In einer besonders bevorzugten Ausführungsform wird die Differenz zwischen Ladedruck-Sollwert und Ladedruck-Istwert zur Einstellung der Gastaschenventilstellung genutzt. Dabei kann ein Regler, beispielsweise in Form eines P, I oder auch PID-Reglers oder Ähnlichem appliziert werden, um Überschwingungen auszuregeln. Der Regler regelt dabei die im realen Betriebsverhalten auftretenden Abweichungen zwischen Soll- und Istwert des Ladedruckes aus. Ein aus den Abweichungen resultierendes Überregeln wird somit vermieden.

In einer weiteren bevorzugten Ausführungsvariante der vorliegenden Erfindung wird die Rotordrehzahl in Abhängigkeit der Motordrehzahl und/oder des Ladedruck-Istwertes eingestellt. Die Rotordrehzahl ist dabei eine entscheidende Einflussgröße für den Ladungswechsel innerhalb des Druckwellenladers. Die Rotordrehzahl wird von einem Elektromotor, der den Druckwellenladerrotor aktiv antreibt, vorgegeben.

Besonders bevorzugt werden Lastschwingungen während des Leerlaufes der Verbrennungskraftmaschine durch Einstellung der Gastaschenventilstellung und/oder der Steuerscheibenstellung kompensiert. Dies ermöglicht es eine im Wesentlichen konstante Rotordrehzahl zu halten, wodurch positive oder auch negative Beschleunigungen des Rotors vermieden werden.

Dies wirkt sich zum einen besonders vorteilig auf die zu erwartenden akustischen Effekte aus, zum anderen wird durch Vermeidung von Beschleunigungen des Rotors weitestgehend Energie eingespart, was sich wiederum vorteilig auf den Wirkungsgrad des Druckwellenladers auswirkt. Die Einstellung des Gastaschenventils oder aber der Steuerscheibe kann durch die jeweils korrespondierenden Aktuatoren besonders schnell und effizient erfolgen. Hieraus resultiert eine schnelle Anpassung an den jeweiligen Betriebszustand der Verbrennungskraftmaschine, was wiederum zu einer Erhöhung des Wirkungsgrades dieser führt.

In einer weiteren besonders bevorzugten Ausführungsvariante der vorliegenden Erfindung werden Lastschwingungen während des Leerlaufes der Verbrennungskraftmaschine durch kurzfristiges Abschalten eines Verbrauchers kompensiert. Unter einem Verbraucher sind im Rahmen der Erfindung beispielsweise ein Klimakompressor, eine Fahrzeugheizung oder aber auch ein Servolenkungskompressor, eine Wasserpumpe, eine Heckscheibenheizung oder ähnliche Bauteile zu verstehen.

Bei heutigen Verbrennungskraftmaschinen wird zur Kraftstoffeinsparung die Leerlaufdrehzahl so niedrig wie möglich eingestellt. Bei aufgeladenen hubraumkleinen Motoren ist es schwierig die Motorleerlaufdrehzahl konstant zu halten, so dass es schlimmstenfalls zu einer unerwünschten Motorabschaltung kommen kann, wenn Verbraucher ein- und/oder ausgeschaltet werden.

Ebenfalls kann bei niedrigem Umgebungsluftdruck und niedriger Umgebungslufttemperatur ein Anfahrproblem entstehen, wenn alle Verbraucher eingeschaltet sind. Dieses Phänomen tritt besonders bei hubraumarmen Motoren in schweren Kraftfahrzeugen auf, die mit zahlreichen elektrischen Verbrauchern ausgestattet sind. Um den Stromverbrauch des Druckwellenladers im Leerlauf und auch im leerlaufnahen Bereich so gering wie möglich zu halten, sollen Stelleingriffe über den Rotormotor durch Abschalten der Verbraucher kompensiert werden.

Ist zusätzlich zu einer Steuerungs- und Regelungsmöglichkeit über die Steuerscheibenstellung bzw. die Gastaschenventilstellung eine Stellung über die Rotordrehzahl erforderlich, so kann im Rahmen der Erfindung durch Abschalten eines Verbrauchers kurzfristig der hierdurch freiwerdende elektrische Energieanteil auf die Steuerung und Regelung des Elektrorotormotors umgeleitet werden. Dadurch wird eine Leerlauflastschwingung unterdrückt. Im Rahmen der Erfindung kann es sich bei den Lastschwingungen um Schwingungen erzeugt durch mechanische Lasten, beispielsweise übermittelt über den Antriebsstrang, oder aber auch elektrische Lasten handeln, beispielsweise durch positive Beschleunigung des Rotormotors, die eine elektrische Lastschwingung in Form eines elektrischen Mehrverbrauches darstellt.

In einer weiteren Ausführungsvariante der vorliegenden Erfindung werden Lastschwingungen während des Betriebes der Verbrennungskraftmaschine bei im Wesentlichen konstantem Betriebspunkt durch Einstellung der Gastaschenventilstellung und/oder der Steuerscheibenstellung kompensiert. Im Rahmen der Erfindung ist ein im Wesentlichen konstanter Betriebspunkt ein Punkt in einem Verbrennungskraftmaschinenkennfeld, der durch eine im Wesentlichen konstante Motordrehzahl und eine im Wesentlichen konstante Last bestimmt ist. Dieser Betriebspunkt liegt allerdings im realen Einsatz immer nur für einen sehr kleinen Zeitabschnitt im Millisekundenbereich vor, weshalb eine Regelung und Steuerung maßgeblich mit dem erfindungsgemäßen Verfahren in Echtzeit und reaktionsschnell erfolgen kann. Während des Betriebes der Verbrennungskraftmaschine ist ebenfalls zur Ausregelung von Lastschwingungen ein Ausschalten eines Verbrauchers möglich.

In einer weiteren bevorzugten Ausführungsvariante der vorliegenden Erfindung werden die Lastschwingungen während des Betriebs der Verbrennungskraftmaschine bei im Wesentlichen konstanten Betriebspunkt durch Einstellung der Rotordrehzahl kompensiert. Hierdurch ergibt sich die Möglichkeit, den Betriebspunkt des Druckwellenladers auf dem vorliegenden Betriebspunkt der Verbrennungskraftmaschine durch Einstellung der Rotordrehzahl optimal einzustellen. In Kombination mit der Gastaschenventilstellung und/oder der Steuerscheibenstellung zur Kompensierung von Lastschwingungen während des Betriebes der Verbrennungskraftmaschine ist diese Variante eine gute Alternative oder aber auch die Möglichkeit, ein redundantes System bei einem Defekt einer der zuvor genannten Einstellungsmöglichkeiten.

Auch ist es im Rahmen der Erfindung vorstellbar, dass bei einer Änderung der Rotordrehzahl ein elektrischer Verbraucher abgeschaltet wird, um die elektrische Lastschwingung zu kompensieren.

In einer weiteren Ausführungsform der vorliegenden Erfindung wird eine Umluftventilstellung in Abhängigkeit von mindestens einem der folgenden Betriebsparameter eingestellt: dem Ladedruck-Istwert, dem Ladedruck-Sollwert, der Motortemperatur, der Abgastemperatur, der Motordrehzahl, dem Betriebs-Sollpunkt. Bei dem Umluftventil handelt es sich dabei um ein Ventil, das den Kanal 2 mit dem Kanal 3 verbindet. Durch das Umluftventil besteht die Möglichkeit, die verdichtete Luft im Ansaugtrakt direkt dem Abgastrakt zuzuführen. Hierdurch entsteht eine Bypassfunktion, die sowohl den Ladeluftkühler als auch den Verbrennungsmotor im Kreislauf zwischen Ansaugluft und Abgas ausschließt. Besonders vorteilig wirkt sich dies auf die Möglichkeit der schnellen Druckerhöhung im Kanal 3 aus und auf eine Abgastemperaturerhöhung durch Nachverbrennung in einem Katalysator.

Durch dieses System kann eine wesentliche Verbesserung des Anspringverhaltens des Druckwellenladers erzielt werden. Alternativ können zur Steuerung dieser Parameter auch variable Ventilsteuerzeiten von Einlassventil und Auslassventil genutzt werden. Hierdurch wird ein identischer Effekt erzielt und das Umluftventil kann entfallen. Dies spart im Großserieneinsatz weitere Kosten.

Weitere Vorteile, Merkmale, Eigenschaften und Aspekte der vorliegenden Erfindung ergeben sich aus der folgenden Beschreibung. Bevorzugte Ausführungsformen, wie Sie in schematischen Zeichnungen dargestellt sind. Diese dienen dem einfacheren Verständnis der Erfindung. Es zeigen:
- Figur 1: eine Prinzipdarstellung des Kreislaufes von Ansaugluft über Verbrennungskraftmaschine bis zur Abgasabführung und
- Figur 2: ein Flussdiagramm zur Regelung und Steuerung der Einstellungsgrößen.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

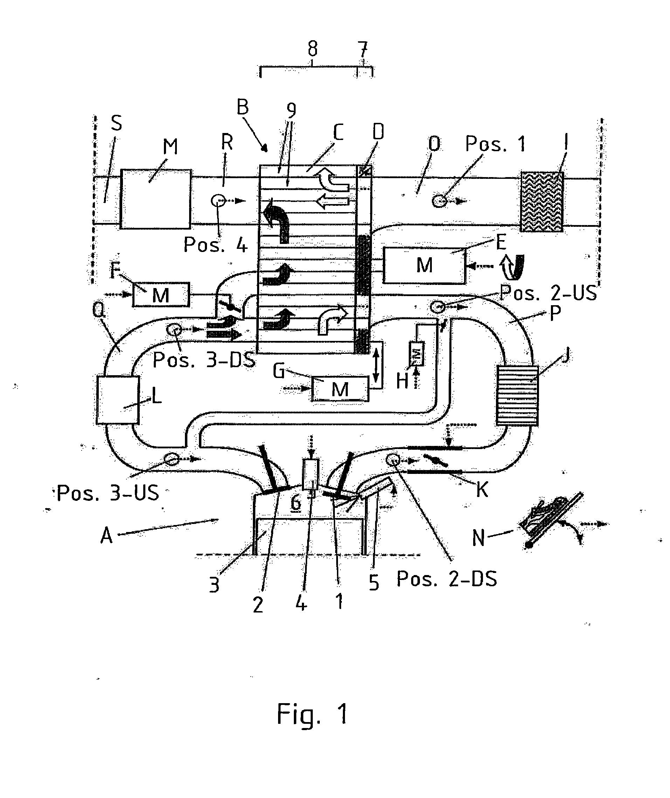

Die Figur 1 zeigt einen Teilbereich einer Verbrennungskraftmaschine A in einer hier dargestellten Ausführungsversion als Ottomotor. Dargestellt ist eine Schnittansicht durch den Zylinder, wobei ein Einlassventil 1, ein Auslassventil 2, ein Kolben 3, eine Zündkerze 4, eine Einspritzdüse 5 und ein Brennraum 6. An die Brennkraftmaschine A ist ein Druckwellenlader B angeschlossen. Der Druckwellenlader B weist wiederum vier an diesem angeschlossene Kanäle (O, P, Q, R) auf. Dieses sind der Kanal 1 (O) im Bereich der angesaugten Frischluft, der Kanal 2 (P) im Bereich der komprimierten Frischluft zur Zuführung zu einem Ladeluftkühler J und einer sich daran anschließenden Drosselklappe K nach der die komprimierte Frischluft dem Brennraum 6 zugeführt wird. Weiterhin ein Kanal 3 (Q), der nach dem Auslassventil 2 und einem Katalysator vor dem Druckwellenlader B angeordnet ist, um das Abgas in den Druckwellenlader B einzuführen. Ebenfalls im Kanal 3 (Q) angeordnet ist ein Gastaschenventil mit einem Gastaschenventilstellmotor F. Im Bereich des Abgasstranges S weist der Druckwellenlader B den Kanal 4 (R) zur Abführung des Abgases nach dem Kompressionsvorgang im Druckwellenlader B auf. Der Kanal 4 (R) weist ebenfalls einen Oxidationskatalysator M auf.

Der Druckwellenlader B weist weiterhin eine Kaltgasgehäuseseite 7 sowie eine Heißgasgehäuseseite 8 auf. In der Kaltgasgehäusehälfte 7 ist eine Steuerscheibe angeordnet. Die Steuerscheibe wird durch einen Steuerscheibenstellmotor angesteuert. Der in dem Druckwellenlader B angeordnete Rotor C wird über einen elektrischen Rotormotor E angesteuert.

Die angesaugte Frischluft folgt einem Weg durch den Kanal 1 (O) in die jeweils am Kanal 1 (O) anliegende Rotorzelle 9 und wird im Druckwellenlader B komprimiert. Die komprimierte Luft wird dann im Auslassbereich des Kanals 2 (P) über den Kanal 2 (P) dem Einlassventil 1 zugeführt. Hierbei ist dem zwischengeschaltet noch ein Umluftventil mit dazugehörigem Stellmotor H in Kanal 2 (P) angeordnet, um den Ladeluftkühler und den Brennraum 6 durch eine Bypassleitung zu umgehen. Im Ladeluftkühler J wird die komprimierte und erhitzte Luft abgekühlt, so dass sich ihr Volumen verkleinert, was zu einem höheren Zylinderfüllungsgrad im Brennraum 6 führt.

Es folgt der Einlasstakt, gefolgt von dem Kompressionstakt, dem Verbrennungstakt und dem Auslasstakt am Beispiel des Viertaktmotors. Im Rahmen der Erfindung ist aber auch die Verwendung für einen anders getakteten Motor vorstellbar.

Im Auslasstakt wird das im Brennraum 6 gebildete Abgas durch den Kanal 3 (Q) dem Druckwellenlader B wieder auf der Heißgasseite zugeführt. Dabei ist ein Katalysator L zwischengeschaltet, der eine erste Abgasnachbehandlung vornimmt. Ebenfalls im Kanal 3 (Q) befindet sich das Gastaschenventil F, das angetrieben über einen Gastaschenventilstellmotor F einen vermehrten Eintritt von Restgas in die Rotorzellen 9 über die Einlassöffnung des Kanals 3 (Q) ermöglicht sowie Abgas vorbei am Rotor führt direkt in Kanal 4 (R). Im Rahmen der Erfindung ist es auch möglich das Abgas direkt über das Gastaschenventil von Kanal 3 (Q) in Kanal 4 (R) zu leiten.

Die Druckwelle komprimiert die durch den Kanal 1 angesaugte Frischluft und sorgt dafür, dass die komprimierte Frischluft in den Kanal 2 (P) strömt und wird anschließend durch die Auslassöffnung der Rotorzellen am Kanal 4 (R) in den Abgasstrang überführt. Das Abgas durchströmt dann gegebenenfalls weitere Abgasnachbehandlungskomponenten, beispielsweise in Form eines Oxidationskatalysators M.

Weiterhin sind in der Figur 1 Messpunkte angegeben, die mögliche Abgriffe der benötigten Betriebsgrößen darstellen. Position 1 zeigt einen Abgriff von Messdaten im Ansaugbereich der Frischluft. Pos. 2 US zeigt einen Abgriff von Messgrößen im Bereich der verdichteten Frischluft vor dem Ladeluftkühler J. Pos. 2 DS zeigt einen Abgriff nach der Drosselklappe K kurz vor dem Einlassventil 1 der Verbrennungskraftmaschine A. Pos. 3 US zeigt einen möglichen Abgriffspunkt im Kanal 3 (Q). Pos. 3 DS zeigt einen Messpunkt im Kanal 3 (Q) vor dem Eintritt in den Druckwellenlader B. Die Pos. 3 US und 3 DS sind jeweils so gewählt, dass sie den Gesamtstrom nach bzw. vor dem Umluftventil H bzw. Gastaschenventil F messen, um so Messdaten für eine Umluftventilstellung oder Gastaschenventilstellung b zu liefern.

Pos. 4 zeigt einen möglichen Messpunkt im Abgasstrang S nach dem Druckwellenlader B. Die hier dargestellten Messpositionen haben sich in Rahmen der Erfindung als vorteilig erwiesen, können jedoch je nach Anwendungsfall um weitere Messpositionen ergänzt oder verringert werden und auch in ihrer örtlichen Position frei wählbar gesetzt werden.

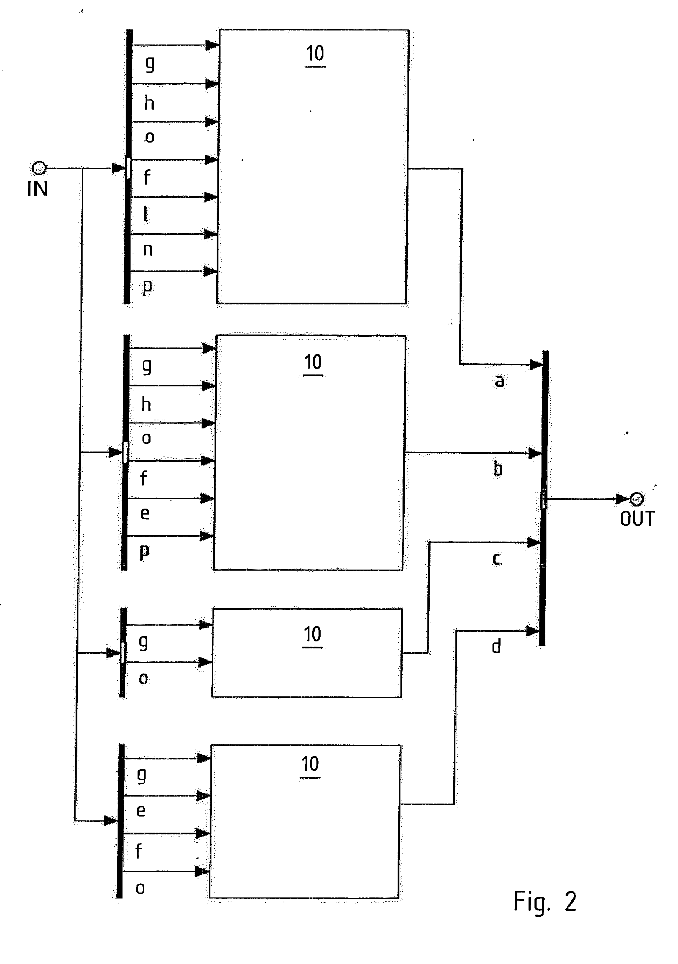

Figur 2 zeigt ein Blockschaltbild zur Einstellung eines Ladedruckes. Hierbei werden auf die Bildebene bezogen auf der linken Seite über den Punkt IN Daten über ein Datenbussystem geliefert. Diese Daten werden auf die Bildebene bezogen auf der rechten Seite in einen Punkt OUT wiederum in einen Datenbus weitergegeben. Auf dem Datenbus sind jeweils die für ein erfindungsgemäßes Verfahren benötigten Betriebsparameter abgreifbar. Das hier dargestellte Blockschaltbild ist beispielsweise auf einem Steuergerät implementiert.

In dem obersten auf die Bildebene bezogene Auswerte- und Rechenmodul 10 wird die Steuerscheibenstellung a ermittelt. Hierzu werden Ladedruck-Sollwert g, Ladedruck-Istwert h, Motordrehzahl o, Abgastemperatur f, Ladelufttemperatur-Istwert I, Ansauglufttemperatur-Istwert n und Umgebungsluftdruck p aus dem Datenbus eingelesen. Das Auswerte- und Rechenmodul 10 ermittelt dann mit einem erfindungsgemäßen Verfahren die gewünschte Soll-Steuerscheibenstellung und gibt diese wiederum an einen Datenbus weiter. Die Weitergabe kann allerdings auch direkt an den Steuerscheibenstellmotor erfolgen.

In einem weiteren Auswerte- und Rechenmodul 10 wird die Gastaschenventilstellung b ermittelt. Hierzu werden Ladedruck-Sollwert g, Ladedruck-Istwert h, Motordrehzahl o, Abgastemperatur f, Motortemperatur e und Umgebungsluftdruck p in das Auswerte- und Rechenmodul 10 gespeist. Mit mindestens einer der Betriebsgrößen wird die Gastaschenventilsollstellung ermittelt und ebenfalls wiederum an einem Datenbussystem oder aber auch direkt an den Gastaschenventilstellmotor F weitergegeben.

In einem weiteren Auswerte- und Rechenmodul 10 wird die Rotordrehzahl c des Druckwellenladers B ermittelt. Hierzu werden aus dem Datenbus Ladedruck-Sollwert g und Motordrehzahl o ausgewertet. Auch wiederum kann hier eine Weitergabe an einen Datenbus erfolgen oder aber eine direkte Ansteuerung des Auswerte- und Rechenmoduls 10 des Rotormotors E.

Ein weiteres Auswerte- und Rechenmodul 10 ermittelt die gewünschte Umluftventilstellung d. Hierzu werden Ladedruck-Sollwert g, Motortemperatur e, Abgastemperatur f sowie Motordrehzahl o ausgewertet. Die Umluftventilsollstellung wird wiederum an ein Bussystem oder aber auch direkt an den Umluftventilstellmotor H weitergegeben.

Im Rahmen der Erfindung ist es auch vorstellbar, die in Figur 2 beschriebenen Auswerte- und Steuermodule 10 in einem Auswerte- und Steuermodul zusammenzufassen bzw. die Auswertungs- und Rechenarbeit auf ein Steuergerät zu applizieren.

### Bezugszeichen:

- 1 -: Einlassventil
- 2 -: Auslassventil
- 3 -: Kolben
- 4 -: Zündkerze
- 5 -: Einspritzdüse
- 6 -: Brennraum
- 7 -: Kaltgasgehäuseseite
- 8 -: Heißgasgehäuseseite
- 9 -: Rotorzelle
- 10 -: Auswerte-/Rechenmodul
- A -: Verbrennungskraftmaschine
- B -: Druckwellenlader
- C -: Rotor
- D -: Steuerscheibe
- E -: Rotormotor
- F -: Gastaschenventil + Motor
- G -: Steuerscheibenmotor
- H -: Umluftventil + Motor
- I -: Luftfilter
- J -: Ladeluftkühler
- K -: Drosselklappe
- L -: Katalysator
- M -: Oxidationskatalysator
- N -: Fahrpedal
- O -: Kanal 1
- P -: Kanal 2
- Q -: Kanal 3
- R -: Kanal 4
- S -: Abgasstrang

- a -: Steuerscheibenstellung
- b -: Gastaschenventilstellung
- c -: Rotordrehzahl des Druckwellenladers
- d -: Umluftventilstellung
- e -: Motortemperatur
- f -: Abgastemperatur
- g -: Ladedruck-Sollwert
- h -: Ladedruck-Istwert
- i -: Betriebssollpunkt
- j -: Temperaturfrischluft Kanal 1
- k -: Rotordrehzahl
- l -: Ladelufttemperatur-Istwert
- m -: Betriebssollpunkt
- n -: Ansauglufttemperatur-Istwert
- o -: Motordrehzahl
- p -: Umgebungsluftdruck

## Patentansprüche

1. Verfahren zur Einstellung eines Ladedruckes einer Verbrennungskraftmaschine (A), wobei der Ladedruck durch einen Druckwellenlader (B) aufgebaut wird und an den Druckwellenlader (B) ein Kanal 1 (O) zum Ansaugen von Frischluft, ein Kanal 2 (P) zum Abführen der komprimierten Frischluft, ein Kanal 3 (Q) zum Zuführen von Abgas und ein Kanal 4 (R) zum Abführen von Abgas angeschlossen sind und der Druckwellenlader (B) ein Kaltgasgehäuse, an dem Kanal 1 (O) und Kanal 2 (P) angeschlossen sind, ein Gastaschenventil (F), das im Bereich des Kanal 3 (Q) angeordnet ist, ist **dadurch gekennzeichnet, dass** im Kaltgasgehäuse eine Steuerscheibe (D) zur Einstellung des Druckwellenprozesses über einen geometrischen Versatz von Kanal 3 - 4 zu Kanal 1 - 2 angeordnet ist und der Ladedruck in Abhängigkeit einer Steuerscheibenstellung (a) und/oder einer Gastaschenventilstellung (b) und/oder einer Rotordrehzahl (c) des Druckwellenladers (B) eingestellt und/oder geregelt wird.

2. Verfahren nach Anspruch 1, **dadurch gekennzeichnet, dass** die Steuerscheibenstellung (a) in Abhängigkeit von mindestens einem der folgenden Betriebsparameter eingestellt wird: der Motordrehzahl (o), der Motortemperatur (e), dem Ladelufttemperatur-Istwert (l), dem Ansauglufttemperatur-Istwert (n), dem Umgebungsluftdruck (p), der Abgastemperatur (f), des Ladedruck-Sollwertes (g), des Ladedruck-Istwertes (h), dem Betriebssollpunkt (i).

3. Verfahren nach einem der Ansprüche 1 oder 2, **dadurch gekennzeichnet, dass** die Steuerscheibenstellung (a) in Abhängigkeit von der Differenz von Ladedruck-Sollwert (g) und Ladedruck-Istwert (h) eingestellt wird.

4. Verfahren nach einem der Ansprüche 1 bis 3, **dadurch gekennzeichnet, dass** die Steuerscheibenstellung (a) in Abhängigkeit von der Temperatur (n) und dem thermodynamischen Zustand der Frischluft im Kanal 1 (O), der Rotordrehzahl (c) und/oder der Druckwellenladergeometrie eingestellt wird.

5. Verfahren nach einem der Ansprüche 1 bis 4, **dadurch gekennzeichnet, dass** eine Spülluftmenge von Kanal 1 (O) zu Kanal 4 (R) durch die Einstellung der Steuerscheibenstellung (a) geregelt wird.

6. Verfahren nach Anspruch 5, **dadurch gekennzeichnet, dass** die Spülluftmenge von Kanal 1 (O) zu Kanal 4 (R) während eines Kaltstarts durch die Steuerscheibenstellung (a) eingestellt wird.

7. Verfahren nach einem der Ansprüche 1 bis 6, **dadurch gekennzeichnet, dass** ein Überströmen von Abgas von Kanal 3 (Q) zu Kanal 2 (P) in den Frischgasbereich durch die Steuerscheibenstellung (a) in Abhängigkeit von mindestens einem der nachfolgenden Betriebsparameter vermieden wird: den Ladelufttemperatur-Istwerte (l), dem Betriebssollpunkt (i), der Motordrehzahl (o), der Ansauglufttemperatur (n), der Abgastemperatur (f).

8. Verfahren nach einem der Ansprüche 1 bis 7, **dadurch gekennzeichnet, dass** die Gastaschenventilstellung (b) in Abhängigkeit von mindestens einem der nachfolgenden Betriebsparameter eingestellt wird: der Motordrehzahl (o), der Motortemperatur (e), der Abgastemperatur (f), dem Ladedruck-Istwert (h), Ladedruck-Sollwert (g), dem Umgebungsluftdruck (p).

9. Verfahren nach einem der Ansprüche 1 bis 8, **dadurch gekennzeichnet, dass** eine Differenz zwischen Ladedruck-Sollwert (g) und Ladedruck-Istwert (h) zur Einstellung der Gastaschenventilstellung (b) genutzt wird.

10. Verfahren nach einem der Ansprüche 1 bis 9, **dadurch gekennzeichnet, dass** die Rotordrehzahl (c) in Abhängigkeit der Motordrehzahl (o) und/oder des Ladedruck-Istwertes (h) eingestellt wird.

11. Verfahren nach einem der Ansprüche 1 bis 10, **dadurch gekennzeichnet, dass** Lastschwingungen während des Leerlaufes der Verbrennungskraftmaschine (A) durch Einstellung der Gastaschenventilstellung (b) und/oder Steuerscheibenstellung (a) kompensiert werden.

12. Verfahren nach einem der Ansprüche 1 bis 11, **dadurch gekennzeichnet, dass** Lastschwingungen während des Leerlaufes der Verbrennungskraftmaschine (A) durch kurzfristiges Abschalten eines Verbrauchers kompensiert werden.

13. Verfahren nach einem der Ansprüche 1 bis 12, **dadurch gekennzeichnet, dass** Lastschwingungen während des Betriebes der Verbrennungskraftmaschine (A) bei im Wesentlichen konstantem Betriebspunkt durch Einstellung der Gastaschenventilstellung (b) und/oder der Steuerscheibenstellung (a) kompensiert werden.

14. Verfahren nach einem der Ansprüche 1 bis 13, **dadurch gekennzeichnet, dass** Lastschwingungen während des Betriebes der Verbrennungskraftmaschine (A) bei im Wesentlichen konstantem Betriebspunkt durch Einstellung der Rotordrehzahl (c) kompensiert werden.

15. Verfahren nach einem der Ansprüche 1 bis 14, **dadurch gekennzeichnet, dass** die Umluftventilstellung (d) in Abhängigkeit von mindestens einem der folgenden Betriebsparameter eingestellt wird: dem Ladedruck-Istwert (h), dem Ladedruck-Sollwert (g), der Motortemperatur (e), der Abgastemperatur (f), der Motordrehzahl (o), dem Betriebs-Sollpunkt (i).
